# EUROPEAN PATENT SPECIFICATION

(11) **EP 3 749 698 B1**
(45) Date of publication and mention of the grant of the patent: **20.04.2022**
(21) Application number: 19701129.9
(22) Date of filing: 25.01.2019
(51) Int. Cl.: C08F 110/06, C08F 4/657

(54) **COMPONENTS AND CATALYSTS FOR THE POLYMERIZATION OF OLEFINS**
KOMPONENTEN UND KATALYSATOREN ZUR OLEFINPOLYMERISIERUNG
COMPOSANTS ET CATALYSEURS POUR LA POLYMÉRISATION DES OLÉFINES

(30) Priority: 05.02.2018 EP 18155138
(43) Date of publication of application: 16.12.2020
(73) Proprietor: Basell Poliolefine Italia S.r.l., 20121 Milano (IT)
(72) Inventor: GUIDOTTI, Simona, 44122 Ferrara (IT); LIGUORI, Dario, 44122 Ferrara (IT); MORINI, Giampiero, 44122 Ferrara (IT); VITALE, Gianni, 44122 Ferrara (IT)
(74) Representative: LyondellBasell
(86) International application number: PCT/EP2019/051886
(87) International publication number: WO 2019/149636

(56) References cited:
- WO-A1-2004/024785
- WO-A1-2017/042054

## Description

### FIELD OF THE INVENTION

The present disclosure relates to a catalyst component for the polymerization of olefins, to the catalyst obtained therefrom and to the use of said catalysts in the polymerization of olefins CH₂=CHR in which R is hydrogen or a hydrocarbyl radical with 1-12 carbon atoms. In particular, the present disclosure relates to catalyst components, for the stereospecific polymerization of olefins, comprising Ti, Bi, Mg, halogen and an electron donor compound obtained by a specific process.

### BACKGROUND OF THE INVENTION

High-yield Ziegler-Natta catalyst components for the polymerization of olefins, and in particular for propylene, are available in the art. They can be obtained by supporting, on a magnesium dihalide, a titanium compound and an electron donor compound as a selectivity control agent. Said catalyst components are then used together with an aluminum alkyl and, optionally, another electron donor (external) compound in the stereospecific polymerization of propylene.

The above mentioned catalyst components may be employed in different polymerization techniques depending on their average particle size. Although it is not a fixed rule, tendentially small particle size catalyst are more frequently used in slurry or bulk polymerization techniques while tendentially large size catalyst are more suited for gas-phase polymerization reactors.

Catalyst components having a relatively small particle size can be prepared according to different techniques. One of these techniques is described in EP452156, involving a precipitation of a starting solution comprising a magnesium compound, an alcohol and a Ti compound, which produces catalyst components having a relatively high polymerization activity. Notwithstanding relatively small particle size of the catalyst however, the bulk density of the polymer particles is relatively low due to their poorly regular morphology. Also, the molecular weight distribution of the polymer is tendentially broad so that the polymer becomes not usable for certain applications.

It would be therefore desired to have a catalyst modified in such a way that it is capable to produce polymers with higher bulk density and narrower molecular weight distribution together with the same or higher stereospecificity.

### SUMMARY OF THE INVENTION

The applicant has surprisingly found a solid catalyst component satisfying the needs which comprises titanium, bismuth magnesium, halogen, an electron donor compound and is obtained by a process comprising the following steps:
(a) dissolving a magnesium halide in a solvent system comprising one or more electron donor compounds and a liquid hydrocarbon at a temperature higher than 40°C;
(b) cooling the solution to a temperature below 40°C and adding a titanium compound in a molar excess with respect to the magnesium halide;
(c) raising the temperature of the solution to higher than 70°C thereby obtaining a solid product;
(d) treating the solid obtained in (c) with an excess of titanium halide at a temperature higher than 80°C for one or more times followed by recovering the solid particles of catalyst component, said process being characterized by the fact that a bidentate electron donor compound is present in either or both of steps (c) and (d) and in that a Bi compound is present in one or more of the steps (a)-(d).

According to the present disclosure, the term halide of magnesium includes magnesium dihalides such as magnesium dichloride, magnesium dibromide and magnesium diiodide; complexes of magnesium dihalide with Lewis base such as water or alcohol, and derivatives of magnesium halide wherein a halogen atom is substituted by a hydrocarboxyl or halohydrocarboxyl group. Magnesium dichloride is the preferred magnesium halide.

Electron donor compounds capable of dissolving the magnesium compound are preferably selected from the group consisting of alcohols, aldehydes, amines, organic carboxylic acids, anhydrides, ethers, organic epoxy compounds, organic phosphorous compounds, and mixtures thereof.

Although the minimum dissolution molar ratio between magnesium compound and electron donor depends from the specific compounds used, the electron donor compound or mixture can be employed in an equimolar amount or molar excess with respect to Mg.

Preferably, in the case of dissolving a halogen-containing magnesium compound in a hydrocarbon solvent using an alcohol as a donor electron, the alcohol may be used, for example, in an amount of at least about 1 mole, preferably about 1 to about 20 moles, more preferably about 1.5 to about 12 moles, per mole of the halogen-containing magnesium compound. When an aliphatic hydrocarbon or an alicyclic hydrocarbon is used as the hydrocarbon solvent, alcohols are used in the aforesaid amount.

There is no particular upper limit to the amount of the alcohols used, but economically, it should desirably be not too large. For example, the amount of the alcohol is not more than about 40 moles, preferably not more than about 20 moles, more preferably not more than 10 moles, per mole of the magnesium compound.

Preferred alcohols are those having at least 6 carbon atoms, preferably 6 to 20 carbon atoms. Particularly preferred alcohols include aliphatic alcohols such as 2-methylpentanol, 2-ethylbutanol, n-heptanol, n-octanol, 2-ethylhexanol, decanol, dodecanol, tetradecyl alcohol, undecenol, oleyl alcohol and stearyl alcohol; alicyclic alcohols such as cyclohexanol and methyl cyclohexanol; aromatic alcohols such as benzyl alcohol, methylbenzyl alcohol, isopropylbenzyl alcohol, α-methylbenzyl alcohol and α,α-dimethylbenzyl alcohol and aliphatic alcohols containing an alkoxy group such as ethylene glycol mono-n-butyl ether and i-butoxy-2-propanol.

The above alcohols can be used alone or in mixture and also in mixture with alcohols having 5 or less carbon atoms with the indicated molar ratio. However, if only alcohols having 5 or less carbon atoms are used, the total amount of the alcohols should preferably be at least about 15 moles per mole of the halogen-containing magnesium compound.

On the other hand, if an aromatic hydrocarbon is used as the hydrocarbon solvent, the halogen-containing magnesium compound can be solubilized by using the alcohols in an amount of about 1 to about 20 moles, preferably about 1.5 to about 12 moles, irrespective of the types of the alcohols.

Dissolution of the halogen-containing magnesium compound in the solvent system may start at room temperature or at higher temperatures but then the mixture is to be raised to at least 40°C, preferably at least 45°C, more preferably from 50 to 300°C, and especially from 100 to about 200°C. The dissolution time may vary from a period of 15 minutes to 5 hours, preferably from 30 minutes to 2 hours.

As mentioned, in addition to, or in alternative of, alcohols, other electron donor compounds or mixtures can be used to dissolve the magnesium compound.

Organic epoxy compounds include oxides of aliphatic olefins, aliphatic diolefins, halogenated aliphatic olefins, and halogenated aliphatic diolefins, glycidyl ethers, cyclic ethers and the like having 2-8 carbon atoms. Non-limiting examples of organic epoxy compounds are ethylene oxide, propylene oxide, butylene oxide, butadiene dioxide, epoxy chloropropane, methylglycidyl ether, diglycidyl ether, tetrahydrofuran, and the like.

Organic phosphorous compounds include organic esters of phosphoric acids such as trimethyl phosphate, triethyl phosphate, tributyl phosphate, triphenyl phosphate, trimethyl phosphate, triethyl phosphate and tributyl phosphate are preferred while tributyl phosphate is the most preferred.

Carboxylic acids include organic carboxylic acids having at least 7, preferably 7 to 20, carbon atoms, such as caprylic acid, 2-ethylhexanoic acid, undecylenic acid, undecanoic acid, nonylic acid and octanoic acid.

Aldehydes can be aldehydes having at least 7, preferably 7 to 18, carbon atoms, such as capric aldehyde, 2-ethylhexyl aldehyde, caprylaldehyde and undecylic aldehyde.

Amines includes amines having at least 6, preferably 6 to 18, carbon atoms, such as heptylamine, octylamine, nonylamine, decylamine, laurylamine, undecylamine and 2-ethylhexylamine.

Amounts of these carboxylic acids, aldehydes, amines or ethers and temperatures for dissolution are the same as those described hereinabove. Alcohols are especially preferred as the electron donor for obtaining the solution in (a).

Liquid hydrocarbons which can be used in step (a) include aliphatic hydrocarbons such as pentane, hexane, heptane, octane, decane, dodecane, tetradecane and kerosene; alicyclic hydrocarbons such as cyclopentane, methylcyclopentane, cyclohexane, methylcyclohexane, cyclooctane and cyclohexene; aromatic hydrocarbons such as benzene, toluene, xylene, ethylbenzene, cumene and cymene; and halogenated hydrocarbons such as dichloroethane, dichloropropane, trichloroethylene, carbon tetrachloride and chlorobenzene.

After dissolution of the magnesium halide, the solvent system may also be added with a further solvent modifying compound which can be selected from the group consisting of dicarboxylic acid anhydrides. Preferably, it is selected among aromatic dicarboxylic acid anhydrides and more preferably is phthalic anhydride. The solvent modifying compound is preferably used in a lower molar amount with respect to the main electron donor compound.

In step (b), after cooling the solution at a temperature lower than 40°C, preferably lower than 35°C and more preferably lower than 30°C a Ti compound is added.

The titanium compound used in step (b) is preferably a compound having the formula TiXₙ(OR)₄₋ₙ wherein X is a halogen, preferably chlorine, each R is independently a hydrocarbyl group and n is an integer of from 2 to 4. Examples of preferred titanium compounds are titanium tetrachloride, titanium tetrabromide, titanium tetraiodide, dichlorodiethoxy titanium, trichloroethoxy titanium and the like. Preferably a liquid titanium compound is used and more preferably TiCl₄ is used. The titanium compound is used in a molar excess with respect to the Mg compound, preferably in a Ti/Mg molar ratio of 3 or higher more preferably higher than 5.

After addition of the Ti compound the temperature is raised again to 70°C or higher. Preferably the temperature is brought in the range 90-135°C preferably 100-120°C.

In this stage of the process, formation of a solid precipitate may start to occur and at the end of the process stage the resulting solid particles can be separated from the liquid phase.

Precipitation of solid particles takes place in step (c). It has been found that the morphology of the particles is more uniform and regular when an auxiliary electron donor compound has been used in step (a).

Also, particles of regular morphology are more easily obtained when the temperature in step (c) is slowly raised; the rate of temperature increase preferably ranges from about 4°C to about 100°C per hour.

As already mentioned, at this stage of the process a bidentate electron donor compound can be contacted with the generated solid particles. The bidentate donor can either be added to the total reaction mixture of step (c), or in alternative, added to the solid particles separated from the liquid phase and to be subject to step (d). In the latter case, the solid precipitate can be separated from the liquid phase with conventional techniques such as filtration, centrifugation or siphoning of the liquid phase after the solid is settled.

Specifically, the bidentate electron donor compound can be selected from the group consisting of ethers, amines, alkoxysilanes, carbamates, ketones, and esters of aliphatic or aromatic mono or poly carboxylic aliphatic acids.

Esters are preferably selected from the group consisting of alkyl and aryl esters of optionally substituted aromatic polycarboxylic acids such as for example esters of phthalic acids, and esters of aliphatic acids selected from malonic, glutaric, maleic and succinic acids. Specific examples of such esters are n-butylphthalate, di-isobutylphthalate and di-n-octylphthalate. Also, the diesters disclosed in WO2010/078494 and US 7,388,061 can be used. Among this class, particularly preferred are the 2,4-pentanediol dibenzoate derivatives and 3-methyl-5-t-butyl catechol dibenzoates. In addition, the internal donor can be selected among diol derivatives chosen among dicarbamates, monoesters monocarbamates and monoesters monocarbonates.

Moreover, can be used also the 1,3 diethers of the formula: 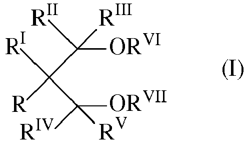 wherein R, R^{I}, R^{II}, R^{III}, R^{IV} and R^{V} equal or different to each other, are hydrogen or hydrocarbon radicals having from 1 to 18 carbon atoms, and R^{VI} and R^{VII}, equal or different from each other, have the same meaning of R-R^{V} except that they cannot be hydrogen; one or more of the R-R^{VII} groups can be linked to form a cycle. The 1,3-diethers in which R^{VI} and R^{VII} are selected from C₁-C₄ alkyl radicals are particularly preferred.

It is also possible to use mixtures of the above-mentioned donors. Specific mixtures are those constituted by esters of aliphatic diacids and 1,3 diethers. Examples of such mixtures are disclosed in WO2011/061134.

It is easily derivable for the ones skilled in the art that the above-mentioned compounds can be used either in form of pure isomers or in the form of mixtures of enantiomers, or mixture of regioisomers and enantiomers.

In general, the amount of bidentate electron donor (ID) compound used in the catalyst preparation is such that the Mg/(ID) molar ratio ranges from 1 to 50 preferably from 2 to 25. In general, the amount of electron donor compound in the final solid catalyst component may range from 0.5 to 40 wt% by weight preferably in the range from 1 to 35 wt% with respect to the total weight of the solid catalyst component.

In step (d) the solid particles are then contacted with a titanium halide, preferably titanium tetrachloride or a mixture of titanium tetrachloride and an inert diluent, and then washed with an inert diluent. The titanium halide is used in excess, preferably in large excess. Preferably, it is used in amounts ranging from 2 to 50 moles, preferably 2 to 40 moles, per mole of magnesium. The treatment temperature ranges from higher than 80°C to 150°C, preferably from 90°C to 130°C. If a mixture of titanium tetrahalide and inert diluent is used to treat the solid precipitate, the amount of titanium tetrahalide in the treating solution is 10-99 percent by vol., preferably 20-80 percent, the rest being an inert diluent.

The treatment stage with the titanium halide can be repeated one or more times under the same conditions. As already said, a bidentate electron donor compound can be used in this stage. When the bidentate donor is used and two or more titanium halide treatment stages are carried out, the donor is preferably added in the first of such stages. It is preferred that the last of such two or more titanium halide treatment stages is carried out without electron donor compound.

At the end of the treatment stages (d) the solid is further washed with an inert diluent to remove undesired impurities.

As mentioned above, in one or more of the reaction steps (a)-(d), a Bi compound is present.

The Bi compound preferably does not have Bi-carbon bonds. In particular, the Bi compounds can be selected from Bi halides, Bi carbonate, Bi carboxylates, Bi acetate, Bi nitrate, Bi oxide, Bi sulphate, Bi sulfide. Compounds in which Bi has the valence +3 are preferred. Among Bi halides, preferred are Bi trichloride and Bi tribromide. The most preferred Bi compounds are BiCl₃ and Bi decanoate.

The amount of bismuth compound used in the process ranges from 0.005 to 0.2 mole per mole of Mg, preferably from 0.010 to 0.1 and more preferably from 0.01 to 0.04.

Although the Bi compound can be introduced in any of the steps (a)-(d), there are preferred ways of introduction. In a first preferred way, the Bi compound is added in step (a) and dissolved together magnesium halide in the solvent system.

In another preferred embodiment, the Bi compound is added in step (b) preferably dissolved or suspended in the liquid medium constituted by, or comprising, the Ti compound.

In a still further preferred embodiment, the Bi compound is added in step (d) preferably dissolved or suspended in a liquid medium constituted by, or comprising, the Ti compound.

The Bi compound can be introduced in more than one step (a)-(d) in order to further enhance the Bi final amount. Preferably however, it is used in only one of the steps (a)-(d).

The catalyst component (A) according to the present disclosure which is obtained through the above described steps can be used as a solid or as a suspension.

The solid catalyst components (A) according to the present disclosure are converted into catalysts for the polymerization of olefins by reaction with (B) organoaluminum compounds.

Preferred organoaluminum compounds are the alkyl-Al compounds which are preferably selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt₂Cl and Al₂Et₃Cl₃. In the catalyst system of the disclosure, the molar ratio of aluminum in component (B) to titanium in component (A) is from 5 to 1000, preferably from 100 to 800, and the molar ratio of silicon in component (C) to titanium in component (A) is from 2 to 100, preferably from 5 to 40.

When polymers having a very high isotactic index are to be produced, the use of an external donor compound is preferred. The external donor (C) can be of the same type or it can be different from the electron donor compound used in the preparation of the solid catalyst component (A).

A class of preferred external donor compounds is that of silicon compounds of formula Rₐ⁵R_{b}⁶Si(OR⁷)_{c}, where a and b are integer from 0 to 2, c is an integer from 1 to 3 and the sum (a+b+c) is 4; R⁵, R⁶, and R⁷, are alkyl, cycloalkyl or aryl radicals with 1-18 carbon atoms optionally containing heteroatoms. Particularly preferred are the silicon compounds in which a is 1, b is 1, c is 2, at least one of R⁵ and R⁶ is selected from branched alkyl, alkenyl, alkylene, cycloalkyl or aryl groups with 3-10 carbon atoms optionally containing heteroatoms and R⁷ is a C₁-C₁₀ alkyl group, in particular methyl. Examples of such preferred silicon compounds are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. Moreover, are also preferred the silicon compounds in which a is 0, c is 3, R⁶ is a branched alkyl or cycloalkyl group, optionally containing heteroatoms, and R⁷ is methyl. Examples of such preferred silicon compounds are cyclohexyltrimethoxysilane, t-butyltrimethoxysilane and thexyltrimethoxysilane.

The electron donor compound (c) is used in such an amount to give a molar ratio between the organoaluminum compound and said electron donor compound (c) of from 0.1 to 500, preferably from 1 to 300 and more preferably from 3 to 100. As previously indicated, when used in the (co)polymerization of olefins, and in particular of propylene, the catalysts of the disclosure allow to obtain, very high yields and polymers endowed with a tendentially broad MWD.

As mentioned above, these catalysts can be used in the processes for the polymerization of olefins CH₂=CHR, in which R is hydrogen or a hydrocarbyl radical with 1-12 carbon atoms. The preferred alpha-olefins to be (co)polymerized are ethylene, propylene, butene-1, 4-methyl-1-pentene and hexene-1. In particular, the above described catalysts have been used in the (co)polymerization of propylene and ethylene to prepare different kinds of products. For example the following products can be prepared: high density ethylene polymers (HDPE, having a density higher than 0.940 g/cm³), comprising ethylene homopolymers and copolymers of ethylene with alpha-olefins having 3-12 carbon atoms; linear low density polyethylenes (LLDPE, having a density lower than 0.940 g/cm³) and very low density and ultra-low density (VLDPE and ULDPE, having a density lower than 0.920 g/cm³, to 0.880 g/cm³ cc) consisting of copolymers of ethylene with one or more alpha-olefins having from 3 to 12 carbon atoms, having a mole content of units derived from the ethylene higher than 80%; elastomeric copolymers of ethylene and propylene and elastomeric terpolymers of ethylene and propylene with smaller proportions of a diene having a content by weight of units derived from the ethylene comprised between about 30 and 70%, isotactic polypropylenes and crystalline copolymers of propylene and ethylene and/or other alpha-olefins having a content of units derived from propylene higher than 85% by weight (random copolymers); shock resistant polymers of propylene obtained by sequential polymerization of propylene and mixtures of propylene with ethylene, containing up to 30% by weight of ethylene; copolymers of propylene and 1-butene having a number of units derived from 1-butene comprised between 10 and 40% by weight.

Any kind of polymerization process can be used with the catalysts of the disclosure that are very versatile. The polymerization can be carried out for example in slurry using as diluent an inert hydrocarbon solvent, or in bulk using the liquid monomer (for example propylene) as a reaction medium. Moreover, it is possible to carry out the polymerization process in gas-phase operating in one or more fluidized or mechanically agitated bed reactors.

The catalyst of the present disclosure can be used as such in the polymerization process by introducing it directly into the reactor. In the alternative, the catalyst can be pre-polymerized before being introduced into the first polymerization reactor. The term pre-polymerized as used in the art, means a catalyst which has been subject to a polymerization step at a low conversion degree. According to the present disclosure a catalyst is considered to be pre-polymerized when the amount the polymer produced is from about 0.1 up to about 1000 g per gram of solid catalyst component.

The pre-polymerization can be carried out with the alpha olefins selected from the same group of olefins disclosed before. In particular, it is especially preferred pre-polymerizing ethylene or mixtures thereof with one or more α-olefins in an amount up to 20% by mole. Preferably, the conversion of the pre-polymerized catalyst component is from about 0.2 g up to about 500 g per gram of solid catalyst component.

The pre-polymerization step can be carried out at temperatures from 0 to 80°C preferably from 5 to 50°C in liquid or gas-phase. The pre-polymerization step can be performed in-line as a part of a continuous polymerization process or separately in a batch process. The batch pre-polymerization of the catalyst of the disclosure with ethylene in order to produce an amount of polymer ranging from 0.5 to 20 g per gram of catalyst component is particularly preferred.

The polymerization can be carried out at temperature of from 20 to 120°C, preferably of from 40 to 80°C. When the polymerization is carried out in gas-phase the operating pressure can range between 0.5 and 10 MPa, preferably between 1 and 5 MPa. In the bulk polymerization the operating pressure can range between 1 and 6 MPa preferably between 1.5 and 4 MPa. Hydrogen or other compounds capable to act as chain transfer agents can be used to control the molecular weight of polymer.

The following examples are given in order to better illustrate the disclosure without limiting it.

### EXAMPLES

The following examples are given to better illustrate the invention without limiting it.

### CHARACTERIZATIONS

### Determination of Mg, Ti

The determination of Mg and Ti content in the solid catalyst component has been carried out via inductively coupled plasma emission spectroscopy on "I.C.P Spectrometer ARL Accuris". The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the crucible is inserted in an "Claisse Fluxy" apparatus for the complete burning. The residue is collected with a 5% v/v HNO₃ solution and then analyzed via ICP at the following wavelengths: Magnesium, 279.08 nm; Titanium, 368.52 nm.

### Determination of Bi

The determination of Bi content in the solid catalyst component has been carried out via inductively coupled plasma emission spectroscopy on "I.C.P Spectrometer ARL Accuris".

The sample was prepared by analytically weighting in a 200 milliliters volumetric flask 0.1-0.3 grams of catalyst. After slow addition of both ca. 20 milliliters of H₂SO₄ 95-98% and ca. 50 milliliters of distilled water, the sample undergoes a digestion for 12 hours. Then the volumetric flask is diluted to the mark with deionized water. The resulting solution is directly analyzed via ICP at the following wavelength: bismuth, 223.06 nm.

### Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Molecular weight distribution (Mw/Mn)

Molecular Weight and Molecular Weight Distribution (MWD) were measured by way of Gel Permeation Chromatography (GPC) in 1,2,4-trichlorobenzene (TCB). Molecular weight parameters (*M̅ₙ*, *M̅_{w}, M̅_{z}*) and molecular weight distributions for the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were 300 × 7.5 mm and their particle size 13 *µ*m. The mobile phase flow rate was kept at 1.0 mL/min. The measurements were carried out at 150°C. Solution concentrations were 2.0 mg/mL (at 150°C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third order polynomial fit was used for interpolating the experimental data and obtain the relevant calibration curve. Data acquisition and processing was done by using Empower 3 (Waters).

The Mark-Houwink relationship was used to determine the molecular weight distribution and the relevant average molecular weights: the K values were *K_{PS}* = 1.21 × 10⁻⁴ dL/g and *Kpp* = 1.90 × 10⁻⁴ dL/g for polystyrene (PS) and polypropylene (PP) respectively, while the Mark-Houwink exponents *α* = 0.706 for PS and *α* = 0.725 for PP were used.

### Melt flow rate (MIL)

The melt flow rate (MIL) of the polymer was determined according to ISO 1133 (230°C, 2.16 Kg).

### Examples 1-2

Into a 0.5 L round bottom flask, equipped with mechanical stirrer, cooler and thermometer were charged at room temperature under nitrogen atmosphere 25.3 g of magnesium dichloride, 2.1 g of bismuth (III) chloride, 118 mL of n-decane and 103.8 g of 2-ethylhexyl alcohol. The reaction mixture was heated at 130°C in technical time and kept at this temperature for 5.5 h to prepare a homogeneous solution. To this solution was added 5.7 g of phthalic anhydride, and the mixture was stirred at 130°C for 2 h to thereby dissolve phthalic anhydride in the homogeneous solution. The homogeneous solution thus obtained was cooled to room temperature, and 120 mL of the homogeneous solution was added dropwise to 340 mL of titanium tetrachloride kept at -20°C over a period of 2 h. After completion of the addition, the temperature of the mixed solution was elevated over a period of 3 h to 100°C. The mixture was held at 100°C for 1 h, then stirring was stopped, the solid product was allowed to settle and the supernatant liquid was siphoned off at 100°C. After the supernatant was removed, additional fresh TiCl₄ (470 mL) was added. While stirring, diisobutyl phthalate was sequentially added into the flask such to meet a Mg/donor molar ratio of 10. The temperature was raised to 120°C and maintained for 1 h. Thereafter, stirring was stopped, the solid product was allowed to settle and the supernatant liquid was siphoned off at 120°C. After the supernatant was removed, additional fresh TiCl₄ (470 mL) was added to reach the initial liquid volume again. The mixture was then heated at 120°C and kept at this temperature for 0.5 h. Stirring was stopped again, the solid was allowed to settle and the supernatant liquid was siphoned off. The solid was washed once with n-decane kept at 110°C, then two times with anhydrous heptane at 90°C and finally three times with hexane in temperature gradient down to 60°C and one time at room temperature. The obtained solid was then dried under vacuum and analyzed. Both the related composition and propylene polymerization performance are indicated in Table 1.

### Comparative Examples C1 - C2

Into a 0.5 L round bottom flask, equipped with mechanical stirrer, cooler and thermometer were charged at room temperature under nitrogen atmosphere 25.6 g of magnesium dichloride, 120 mL of n-decane and 105.0 g of 2-ethylhexyl alcohol. The reaction mixture was heated at 130°C in technical time and kept at this temperature for 5.0 h to prepare a homogeneous solution. To this solution was added 5.7 g of phthalic anhydride, and the mixture was stirred at 130°C for 2 h to thereby dissolve phthalic anhydride in the homogeneous solution. The homogeneous solution thus obtained was cooled to room temperature, and 120 mL of the homogeneous solution was added dropwise to 340 mL of titanium tetrachloride kept at -20°C over a period of 2 h. After completion of the addition, the temperature of the mixed solution was elevated over a period of 3 h to 100°C. The mixture was held at 100°C for 1 h, then stirring was stopped, the solid product was allowed to settle and the supernatant liquid was siphoned off at 100°C. After the supernatant was removed, additional fresh TiCl₄ (470 mL) was added. While stirring, diisobutyl phthalate was sequentially added into the flask such to meet a Mg/donor molar ratio of 10. The temperature was raised to 120°C and maintained for 1 h. Thereafter, stirring was stopped, the solid product was allowed to settle and the supernatant liquid was siphoned off at 120°C. After the supernatant was removed, additional fresh TiCl₄ (470 mL) was added to reach the initial liquid volume again. The mixture was then heated at 120°C and kept at this temperature for 0.5 h. Stirring was stopped again, the solid was allowed to settle and the supernatant liquid was siphoned off. The solid was washed once with n-decane kept at 110°C, then two times with anhydrous heptane at 90°C and finally three times with hexane in temperature gradient down to 60°C and one time at room temperature. The obtained solid was then dried under vacuum and analyzed. Both the related composition and propylene polymerization performance are indicated in Table 1.

### Comparative Examples C3-C4

The catalyst component was prepared according to the procedure described in Examples 1-9 of WO2017/042054. Both the related composition and propylene polymerization performance are indicated in Table 1.

### General procedure for the polymerization of propylene

A 4-liter steel autoclave equipped with a stirrer, pressure gauge, thermometer, catalyst feeding system, monomer feeding lines and thermostatic jacket, was purged with nitrogen flow at 70°C for one hour. A suspension containing 75 ml of anhydrous hexane, 0.76 g of AlEt₃ (6.66 mmol), 0.33 mmol of external donor and 0.010 g of solid catalyst component, previously precontacted for 5 minutes, was charged. Either dicyclopentyldimethoxysilane, D donor, or cyclohexylmethyldimethoxysilane, C donor, were used as external donor as specified in Table 1.

The autoclave was closed and the desired amount of hydrogen was added (in particular, 2 NL in D donor tests and 1.5 NL in C donor tests). Then, under stirring, 1.2 kg of liquid propylene was fed. The temperature was raised to 70°C in about 10 minutes and the polymerization was carried out at this temperature for 2 hours. At the end of the polymerization, the non-reacted propylene was removed; the polymer was recovered and dried at 70°C under vacuum for 3 hours. Then the polymer was weighed and characterized.

**Table 1**

| | Solid Catalyst Component | | | | Polymerization | | | | | |
|---|---|---|---|---|---|---|---|---|---|---|
| | Mg % wt. | Ti % wt. | Bi % wt. | DIBP % wt. | ED type | Mileage Kg/g | XI %wt. | MIL g/10' | Mw/Mn | BDP Kg/dm³ |
| Ex. 1 | 21.0 | 1.1 | 1.8 | 6.9 | D | 65.3 | 99.3 | 1.6 | 8.1 | 0.449 |
| Ex. 2 | | | | | C | 53.9 | 98.9 | 4.8 | 7.0 | 0.461 |
| C1 | 20.5 | 2.1 | - | 6.9 | D | 84.6 | 98.7 | 2.0 | 9.8 | 0.434 |
| C2 | | | | | C | 71.4 | 97.8 | 5.2 | 7.6 | 0.401 |
| C3 | 20.0 | 1.0 | 2.2 | 6.9 | D | 64.1 | 99.0 | 2.46 | - | 0.409 |
| C4 | | | | | C | 56.6 | 98.3 | 6.58 | - | 0.424 |

| | | | | | | | | | | |
|---|---|---|---|---|---|---|---|---|---|---|
| DIBP = diisobutyl phthalate | | | | | | | | | | |

## Claims

1. A solid catalyst component for the (co)polymerization of olefins comprising titanium, magnesium, halogen and bismuth which is obtainable by a process comprising the following steps:
(a) dissolving a magnesium halide in a solvent system comprising one or more electron donor compounds and a liquid hydrocarbon at a temperature higher than 40°C;
(b) cooling the solution to a temperature below 40°C and adding a titanium compound in a molar excess with respect to the magnesium halide;
(c) raising the temperature of the solution to higher than 70°C thereby obtaining a solid product; and
(d) treating the solid obtained in (c) with an excess of titanium halide at a temperature higher than 80°C for one or more times followed by recovering the solid particles of catalyst component, said process being **characterized by** the fact that a bidentate electron donor compound is present in either or both of steps (c) and (d) and in that a Bi compound is present in one or more of the steps (a)-(d).

2. The catalyst component according to claim 1 **characterized in that** the Bi compound can be selected from Bi halides, Bi carbonate, Bi carboxylates, Bi nitrate, Bi oxide, Bi sulphate and Bi sulfide.

3. The catalyst component according to claim 2 **characterized in that** the Bi compound is Bi trichloride or a Bi decanoate.

4. The catalyst component according to claim 1 **characterized in that** the Bi compound is used in amounts ranging from 0.005 to 0.2 mole per mole of Mg.

5. The catalyst component according to claim 1 **characterized in that** the Bi compound is added in step (a) and dissolved together magnesium halide in the solvent system.

6. The catalyst component according to claim 1 **characterized in that** the Bi compound is added in step (b) or (d) dissolved or suspended in a liquid medium constituted by, or comprising, the Ti compound.

7. The catalyst component according to claim 1 in which in step (a), after dissolution of the magnesium halide but before carrying out step (b), a further compound selected from the group consisting of dicarboxylic acid anhydrides is added to the system.

8. The catalyst component according to claim 1 **characterized in that** said magnesium halide is magnesium dichloride.

9. The catalyst component according to claim 1 **characterized in that** the solvent system comprises an electron donor compound selected from the group consisting of aliphatic alcohols having at least 6 carbon atoms, organic epoxy compounds, organic esters of phosphoric acids and mixtures thereof.

10. The catalyst component according to claim 1 **characterized in that** the titanium compound has the formula TiXₙ(OR)₄₋ₙ wherein X is a halogen, each R is independently a hydrocarbyl group and n is an integer of from 0 to 4.

11. The catalyst component according to claim 1 **characterized in that** the bidentate electron donor is selected from the group consisting of ethers, amines, alkoxysilanes, carbamates, ketones, and esters of aliphatic or aromatic polycarboxylic acids.

12. The catalyst component according to claim 11 **characterized in that** in the electron donor is selected from the group consisting of alkyl and aryl esters of optionally substituted aromatic polycarboxylic acids.

13. The catalyst component according to claim 11 **characterized in that** in the electron donor is selected from mixture of esters of aliphatic diacids and 1,3 diethers.

14. Catalyst for the polymerization of olefins CH₂=CHR, in which R is hydrogen or a hydrocarbyl radical with 1-12 carbon atoms, comprising the product of the reaction between (A) the solid catalyst component according to anyone of the claims 1-13, (B) an alkylaluminum compound and, optionally, (C) one or more external electron-donor compounds.

15. Process for the (co)polymerization of olefins CH₂=CHR, in which R is hydrogen or a hydrocarbyl radical with 1-12 carbon atoms, carried out in the presence of a catalyst according to claim 14.

## Patentansprüche

1. Feste Katalysatorkomponente zur (Co)polymerisation von Olefinen, welche Titan, Magnesium, Halogen und Bismut umfasst, die nach einem Verfahren erhältlich ist, das die folgenden Schritte umfasst:
(a) Lösen eines Magnesiumhalogenids in einem Lösungsmittelsystem, das eine oder mehrere Elektronendonorverbindungen und einen flüssigen Kohlenwasserstoff umfasst, bei einer Temperatur höher als 40 °C;
(b) Kühlen der Lösung auf eine Temperatur unter 40 °C und Zufügen einer Titanverbindung in einem molaren Überschuss in Bezug auf das Magnesiumhalogenid;
(c) Steigern der Temperatur der Lösung auf höher als 70 °C, wodurch ein festes Produkt erhalten wird; und
(d) einmaliges oder mehrmaliges Behandeln des in (c) erhaltenen Feststoffs mit einem Überschuss an Titanhalogenid bei einer Temperatur von mehr als 80 °C, gefolgt von Gewinnen der festen Partikel der Katalysatorkomponente, wobei das Verfahren durch die Tatsache gekennzeichnet ist, dass eine zweizähnige Elektronendonorverbindung in einem oder beiden der Schritte (c) und (d) vorhanden ist, und dass eine Bi-Verbindung in einem oder mehreren der Schritte (a) bis (d) vorhanden ist.

2. Katalysatorkomponente nach Anspruch 1, **dadurch gekennzeichnet, dass** die Bi-Verbindung ausgewählt sein kann aus Bi-Halogeniden, Bi-Carbonat, Bi-Carboxylaten, Bi-Nitrat, Bi-Oxid, Bi-Sulfat und Bi-Sulfid.

3. Katalysatorkomponente nach Anspruch 2, **dadurch gekennzeichnet, dass** die Bi-Verbindung Bi-Trichlorid oder ein Bi-Decanoat ist.

4. Katalysatorkomponente nach Anspruch 1, **dadurch gekennzeichnet, dass** die Bi-Verbindung in Mengen im Bereich von 0,005 bis 0,2 Mol pro Mol Mg verwendet wird.

5. Katalysatorkomponente nach Anspruch 1, **dadurch gekennzeichnet, dass** die Bi-Verbindung in Schritt (a) zugegeben wird und zusammen mit Magnesiumhalogenid in dem Lösungsmittelsystem gelöst wird.

6. Katalysatorkomponente nach Anspruch 1, **dadurch gekennzeichnet, dass** die Bi-Verbindung in Schritt (b) oder (d) in einem flüssigen Medium gelöst oder suspendiert zugegeben wird, das durch die Ti-Verbindung gebildet wird oder diese umfasst.

7. Katalysatorkomponente nach Anspruch 1, wobei in Schritt (a) nach der Auflösung des Magnesiumhalogenids, jedoch vor der Durchführung von Schritt (b) dem System eine weitere Verbindung ausgewählt aus der Gruppe bestehend aus Dicarbonsäureanhydriden zugefügt wird.

8. Katalysatorkomponente nach Anspruch 1, **dadurch gekennzeichnet, dass** das Magnesiumhalogenid Magnesiumdichlorid ist.

9. Katalysatorkomponente nach Anspruch 1, **dadurch gekennzeichnet, dass** das Lösungsmittelsystem eine Elektronendonorverbindung ausgewählt aus der Gruppe bestehend aus aliphatischen Alkoholen mit mindestens 6 Kohlenstoffatomen, organischen Epoxyverbindungen, organischen Estern von Phosphorsäuren und Mischungen davon umfasst.

10. Katalysatorkomponente nach Anspruch 1, **dadurch gekennzeichnet, dass** die Titanverbindung die Formel TiXₙ(OR)₄₋ₙ hat, wobei X ein Halogen ist, jedes R unabhängig eine Kohlenwasserstoffgruppe ist und n eine ganze Zahl von 0 bis 4 ist.

11. Katalysatorkomponente nach Anspruch 1, **dadurch gekennzeichnet, dass** der zweizähnige Elektronendonor ausgewählt ist aus der Gruppe bestehend aus Ethern, Aminen, Alkoxysilanen, Carbamaten, Ketonen und Estern von aliphatischen oder aromatischen Polycarbonsäuren.

12. Katalysatorkomponente nach Anspruch 11, **dadurch gekennzeichnet, dass** der Elektronendonor ausgewählt ist aus der Gruppe bestehend aus Alkyl- und Arylestern von gegebenenfalls substituierten aromatischen Polycarbonsäuren.

13. Katalysatorkomponente nach Anspruch 11, **dadurch gekennzeichnet, dass** der Elektronendonor ausgewählt ist aus einer Mischung von Estern von aliphatischen Disäuren und 1,3-Diethern.

14. Katalysator zur Polymerisation von Olefinen CH₂=CHR, worin R Wasserstoff oder ein Kohlenwasserstoffrest mit 1 bis 12 Kohlenstoffatomen ist, umfassend das Produkt der Reaktion zwischen (A) der festen Katalysatorkomponente nach einem der Ansprüche 1 bis 13, (B) einer Alkylaluminumverbindung und gegebenenfalls (C) einer oder mehreren externen Elektronendonorverbindungen.

15. Verfahren zur (Co)polymerisation von Olefinen CH₂=CHR, worin R Wasserstoff oder ein Kohlenwasserstoffrest mit 1 bis 12 Kohlenstoffatomen ist, das in Gegenwart eines Katalysators gemäß Anspruch 14 durchgeführt wird.

## Revendications

1. Constituant catalytique solide pour la (co)polymérisation d'oléfines comprenant du titane, du magnésium, de l'halogène et du bismuth qui peut être obtenu par un procédé comprenant les étapes suivantes :
(a) dissolution d'un halogénure de magnésium dans un système de solvant comprenant un ou plusieurs composés donneurs d'électrons et un hydrocarbure liquide à une température supérieure à 40°C;
(b) refroidissement de la solution à une température inférieure à 40°C et ajout d'un composé de titane en un excès molaire par rapport à l'halogénure de magnésium ;
(c) élévation de la température de la solution à une température supérieure à 70°C, ce qui permet d'obtenir un produit solide ; et
(d) traitement du solide obtenu en (c) avec un excès d'halogénure de titane à une température supérieure à 80°C, une ou plusieurs fois, suivi par la récupération des particules solides du constituant catalytique, ledit procédé étant **caractérisé en ce qu'**un composé donneur d'électrons bidentate est présent dans l'une ou l'autre des étapes (c) et (d) ou dans les deux et **en ce qu'**un composé de Bi est présent dans une ou plusieurs des étapes (a)-(d).

2. Constituant catalytique selon la revendication 1, **caractérisé en ce que** le composé de Bi peut être choisi parmi les halogénures de Bi, le carbonate de Bi, les carboxylates de Bi, le nitrate de Bi, l'oxyde de Bi, le sulfate de Bi et le sulfure de Bi.

3. Constituant catalytique selon la revendication 2, **caractérisé en ce que** le composé de Bi est le trichlorure de Bi ou un décanoate de Bi.

4. Constituant catalytique selon la revendication 1, **caractérisé en ce que** le composé de Bi est utilisé en des quantités se situant dans la plage de 0,005 à 0,2 mole par mole de Mg.

5. Constituant catalytique selon la revendication 1, **caractérisé en ce que** le composé de Bi est ajouté à l'étape (a) et dissous conjointement avec l'halogénure de magnésium dans le système de solvant.

6. Constituant catalytique selon la revendication 1, **caractérisé en ce que** le composé de Bi est ajouté à l'étape (b) ou (d) sous forme dissoute ou en suspension dans un milieu liquide constitué par, ou comprenant, le composé de Ti.

7. Constituant catalytique selon la revendication 1, dans lequel à l'étape (a), après dissolution de l'halogénure de magnésium mais avant la mise en œuvre de l'étape (b), un autre composé choisi dans le groupe constitué d'anhydrides d'acide dicarboxylique est ajouté au système.

8. Constituant catalytique selon la revendication 1, **caractérisé en ce que** ledit halogénure de magnésium est le dichlorure de magnésium.

9. Constituant catalytique selon la revendication 1, **caractérisé en ce que** le système de solvant comprend un composé donneur d'électrons choisi dans le groupe constitué par les alcools aliphatiques présentant au moins 6 atomes de carbone, les composés époxy organiques, les esters organiques d'acides phosphoriques et les mélanges de ceux-ci.

10. Constituant catalytique selon la revendication 1, **caractérisé en ce que** le composé de titane présente la formule TiXₙ(OR)₄₋ₙ, X représentant halogène, chaque R représentant indépendamment un groupe hydrocarbyle et n représentant un nombre entier de 0 à 4.

11. Constituant catalytique selon la revendication 1, **caractérisé en ce que** le donneur d'électrons bidentate est choisi dans le groupe constitué par les éthers, les amines, les alcoxysilanes, les carbamates, les cétones et les esters d'acides polycarboxyliques aliphatiques ou aromatiques.

12. Constituant catalytique selon la revendication 11, **caractérisé en ce que** le donneur d'électrons est choisi dans le groupe constitué par les esters d'alkyle et d'aryle d'acides polycarboxyliques aromatiques éventuellement substitués.

13. Constituant catalytique selon la revendication 11, **caractérisé en ce que** le donneur d'électrons est choisi parmi un mélange d'esters de diacides aliphatiques et de 1,3-diéthers.

14. Catalyseur pour la polymérisation d'oléfines CH₂=CHR, dans lesquelles R représente hydrogène ou un radical hydrocarbyle présentant 1 à 12 atomes de carbone, comprenant le produit de la réaction entre (A) le constituant catalytique solide selon l'une quelconque des revendications 1 à 13, (B) un composé d'alkylaluminium et, éventuellement, (C) un ou plusieurs composés donneurs d'électrons externes.

15. Procédé de (co)polymérisation d'oléfines CH₂=CHR, dans lesquelles R représente hydrogène ou un radical hydrocarbyle présentant 1 à 12 atomes de carbone, mis en œuvre en présence d'un catalyseur selon la revendication 14.
